(19) Europäisches Patentamt / European Patent Office / Office européen des brevets

(11) **EP 4 440 245 A1**

(12) **EUROPEAN PATENT APPLICATION**
published in accordance with Art. 153(4) EPC

(43) Date of publication:
**02.10.2024 Bulletin 2024/40**

(21) Application number: **22898723.6**

(22) Date of filing: **29.03.2022**

(51) International Patent Classification (IPC):
**H05B 6/12** *(2006.01)*    **H05B 6/06** *(2006.01)*
**A47J 36/32** *(2006.01)*

(52) Cooperative Patent Classification (CPC):
**H05B 6/062; A47J 36/32; H05B 6/06; H05B 6/12;**
H05B 2213/04

(86) International application number:
**PCT/KR2022/004394**

(87) International publication number:
**WO 2023/096033 (01.06.2023 Gazette 2023/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.11.2021 KR 20210166837**

(71) Applicant: **LG Electronics Inc.**
**Yeongdeungpo-gu**
**Seoul 07336 (KR)**

(72) Inventors:
• **SEONG, Hojae**
  **Seoul 08592 (KR)**
• **OH, Dooyong**
  **Seoul 08592 (KR)**
• **OK, Seungbok**
  **Seoul 08592 (KR)**
• **PARK, Byeongwook**
  **Seoul 08592 (KR)**

(74) Representative: **Vossius & Partner**
**Patentanwälte Rechtsanwälte mbB**
**Siebertstrasse 3**
**81675 München (DE)**

(54) **INDUCTION HEATING-TYPE COOKTOP**

(57)    The present disclosure is intended to provide an induction heating type cooktop that detects overheating of a cooking vessel regardless of the amount of water or the material of the vessel, comprising an upper plate part on which a cooking vessel is placed, a working coil configured to generate a magnetic field passing through the cooking vessel, an inverter configured to supply current to the working coil, and a controller configured to detect whether the cooking vessel is overheated, wherein the controller is configured to detect whether the cooking vessel is overheated using load impedance.

【FIG. 6】

**Description**

[TECHNICAL FIELD]

The present disclosure relates to an induction heating type cooktop. More specifically, it relates to an induction heating type cooktop that minimizes a problem of overheating of the cooking vessel due to evaporation of all water in the cooking vessel.

[BACKGROUND ART]

Various types of cooking equipment are used to heat food at home or in a restaurant. Conventionally, gas stoves using gas as fuel have been widely used, but recently devices for heating an object to be heated, for example, cooking vessels such as pots, have been spread using electricity instead of gas.

A method of heating an object to be heated using electricity is largely divided into a resistance heating method and an induction heating method. The electric resistance method is a method of heating an object to be heated by transferring heat generated when an electric current flows through a metal resistance wire or a non-metallic heating element such as silicon carbide to the object to be heated (for example, a cooking vessel) through radiation or conduction. In addition, when high-frequency power of a predetermined magnitude is applied to the coil, the induction heating method generates an eddy current in the object to be heated consisting of a metal component using a magnetic field generated around the coil to heat the object to be heated itself.

Recently, most of the induction heating methods are applied to cooktops.

All of the water in the cooking vessel heated by the cooktop may evaporate, and the state of the cooking vessel in which all the water has evaporated may be referred to as a Dry-up state. Meanwhile, if the cooking vessel continues to be heated in a dry-up state, the cooking vessel may overheat, which may cause problems such as discoloration of an upper plate part of the cooktop. Therefore, there may be a need for a method such as monitoring the dry-up state of the cooking vessel on the cooktop and turning off the power when the dry-up state is detected.

[DISCLOSURE OF INVENTION]

[TECHNICAL PROBLEM]

The purpose of the present disclosure is to provide an induction heating type cooktop that detects the dry-up state of a cooking vessel regardless of an amount of water or a material of the vessel.

The purpose of the present disclosure is to provide an induction heating type cooktop that detects overheating of a cooking vessel regardless of the amount of water or the vessel material.

The purpose of the present disclosure is to provide an induction heating type cooktop that detects whether the cooking vessel is overheated without adding a separate sensor.

[TECHNICAL SOLUTION]

An induction heating type cooktop according to the present disclosure comprises an upper plate part on which a cooking vessel is placed, a working coil configured to generate a magnetic field passing through the cooking vessel, an inverter configured to supply current to the working coil, and a controller configured to detect whether the cooking vessel is overheated, wherein the controller is configured to detect whether the cooking vessel is overheated using load impedance.

The controller is configured to detect whether the cooking vessel is boiling, and to detect whether the cooking vessel is overheated after boiling is detected.

The controller is configured to detect whether the cooking vessel is boiling based on a gradient of the load impedance.

The controller is configured to determine that boiling has occurred in the cooking vessel when it is detected that the gradient of the load impedance is less than a boiling reference level two or more times in succession.

The induction heating type cooktop further comprises an output interface configured to output an alarm indicating the boiling has occurred.

The induction heating type cooktop further comprises a sensor configured to detect a temperature of the cooking vessel, and the controller is configured to detect whether the cooking vessel is overheated by further using the temperature of the cooking vessel.

The controller is configured to determine that the cooking vessel as overheating if a gradient of temperature detected through the sensor at a moment the boiling has occurred in the cooking vessel is greater than twice a gradient of temperature detected through the sensor at current time.

The controller is configured to further perform an auxiliary operation for detecting overheating if the gradient of temperature detected through the sensor at the moment the boiling has occurred in the cooking vessel is equal to or less than twice the gradient of temperature detected through the sensor at current time.

The controller is configured to determine that the cooking vessel as overheating when it is determined that a gradient of the load impedance is greater than an overheating reference level and the gradient of temperature detected at current time is greater than a value obtained by adding a predetermined value to the gradient of the temperature at the moment the boiling has occurred by the auxiliary operation.

The induction heating type cooktop further comprises an output interface configured to output an alarm indicating the overheating has occurred.

[ADVANTAGEOUS EFFECTS]

According to an embodiment of the present disclosure, there is an advantage of being able to detect overheating due to dry-up regardless of the amount of water and the material of the vessel.

According to an embodiment of the present disclosure, it is possible to detect overheating without adding additional parts, thereby simplifying the structure, and minimizing noise for malfunction and overheating detection.

[BRIEF DESCRIPTION OF DRAWINGS]

FIG. 1 is a perspective view showing a cooktop and a cooking vessel according to an embodiment of the present disclosure.

FIG. 2 is a cross-sectional view of a cooktop and a cooking vessel according to an embodiment of the present disclosure.

FIG.3 is a diagram illustrating a circuit diagram of a cooktop according to an embodiment of the present disclosure.

FIG. 4 is a diagram showing output characteristics of a cooktop according to an embodiment of the present disclosure.

FIG. 5 is a control block diagram of an induction heating type cooktop according to an embodiment of the present disclosure.

FIG. 6 is a flow chart illustrating a method of operating an induction heating type cooktop according to an embodiment of the present disclosure.

FIG. 7 is a flow chart illustrating a method of determining whether a cooking vessel is boiling in an induction heating type cooktop according to an embodiment of the present disclosure.

FIG. 8 is a graph showing load impedance when determining boiling of a cooking vessel in an induction heating type cooktop according to an embodiment of the present disclosure.

FIG. 9 is a flow chart illustrating a method of determining whether a cooking vessel is overheated by an induction heating type cooktop according to an embodiment of the present disclosure.

FIG. 10 is a graph showing the gradient of the temperature and load impedance while the induction heating type cooktop according to an embodiment of the present disclosure heats a cooking vessel made of a first material.

FIG. 11 is a graph showing the gradient of the temperature and load impedance while the induction heating type cooktop according to an embodiment of the present disclosure heats a cooking vessel made of a second material.

[BEST MODE FOR CARRYING OUT THE INVENTION]

Hereinafter, embodiments related to the present disclosure will be described in more detail with reference to the drawings. The suffixes "module" and "part" for components used in the following description are given or used interchangeably only for the ease of preparing the specification, and do not have distinct meanings or roles in themselves.

Hereinafter, an induction heating type cooktop and its operating method according to an embodiment of the present disclosure will be described. For convenience of explanation, "induction heating type cooktop" is referred to as "cooktop."

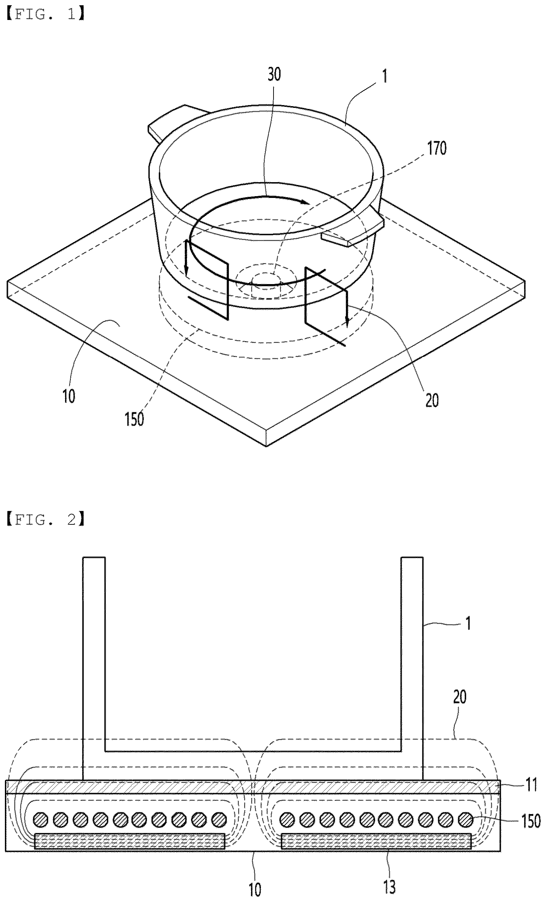

FIG. 1 is a perspective view showing a cooktop and a cooking vessel according to an embodiment of the present disclosure and FIG. 2 is a cross-sectional view of a cooktop and a cooking vessel according to an embodiment of the present disclosure.

The cooking vessel 1 may be located at the top of the cooktop 10, and the cooktop 10 may heat the cooking vessel 1 located at the top.

First, a method by which the cooktop 10 heats the cooking vessel 1 will be described.

As shown in FIG. 1, the cooktop 10 may generate a magnetic field 20 such that at least a portion thereof passes through the cooking vessel 1. At this time, if the material of the cooking vessel 1 contains an electrical resistance component, the magnetic field 20 may induce an eddy current 30 in the cooking vessel 1. This eddy current 30 generates heat in the cooking vessel 1 itself, and this heat is conducted or radiated to the inside of the cooking vessel 1, so that the contents of the cooking vessel 1 can be cooked.

On the other hand, if the material of the cooking vessel 1 does not contain an electrical resistance component, the eddy current 30 does not occur. Therefore, in this case, the cooktop 10 cannot heat the cooking vessel 1.

Accordingly, the cooking vessel 1 that can be heated by the cooktop 10 may be a stainless steel vessel or a metal vessel including an enamel or cast iron vessel.

Next, a method by which the cooktop 10 generates the magnetic field 20 will be described.

As shown in FIG. 2, the cooktop 10 may include at least one of an upper plate part 11, a working coil 150, and a ferrite core 13.

The upper plate part 11 is where the cooking vessel 1 is placed and can support the cooking vessel 1. That is, the cooking vessel 1 may be placed on the upper surface of the upper plate part 11. A heating area in which the cooking vessel 1 is heated may be formed in the upper plate part 11.

Additionally, the upper plate part 11 may be formed of tempered glass made of ceramic material synthesized from various minerals. Accordingly, the upper plate part 11 can protect the cooktop 10 from external shocks, etc.

Additionally, the upper plate part 11 can prevent foreign substances such as dust from entering the cooktop 10.

The working coil 150 may be located below the upper plate part 11. This working coil 150 may or may not be supplied with current to generate the magnetic field 20. Specifically, current may or may not flow in the working coil 150 depending on whether the internal switching element of the cooktop 10 is turned on or off.

A magnetic field 20 is generated when current flows through the working coil 150, and this magnetic field 20 may meet the electrical resistance component contained in the cooking vessel 1 to generate an eddy current 30. The eddy current heats the cooking vessel 1, so that the contents of the cooking vessel 1 can be cooked.

Additionally, the heating power of the cooktop 10 may be adjusted depending on the amount of current flowing through the working coil 150. As a specific example, the greater the current flowing through the working coil 150, the greater the magnetic field 20 is generated. Accordingly, the magnetic field passing through the cooking vessel 1 increases, thereby increasing the heating power of the cooktop 10.

The ferrite core 13 is a component that protects the internal circuit of the cooktop 10. Specifically, the ferrite core 13 serves as a shield to block the influence of the magnetic field 20 generated from the working coil 150 or an externally generated electromagnetic field on the internal circuit of the cooktop 10.

To this end, the ferrite core 13 may be formed of a material with very high permeability. The ferrite core 13 serves to guide the magnetic field flowing into the cooktop 10 to flow through the ferrite core 13 rather than being radiated. The movement of the magnetic field 20 generated in the working coil 150 by the ferrite core 13 may be as shown in FIG. 2.

Meanwhile, the cooktop 10 may further comprises another components in addition to the upper plate part 11, the working coil 150, and the ferrite core 13 described above. For example, the cooktop 10 may further comprises an insulating material (not shown) located between the upper plate part 11 and the working coil 150. That is, the cooktop according to the present disclosure is not limited to the cooktop 10 shown in FIG. 2.

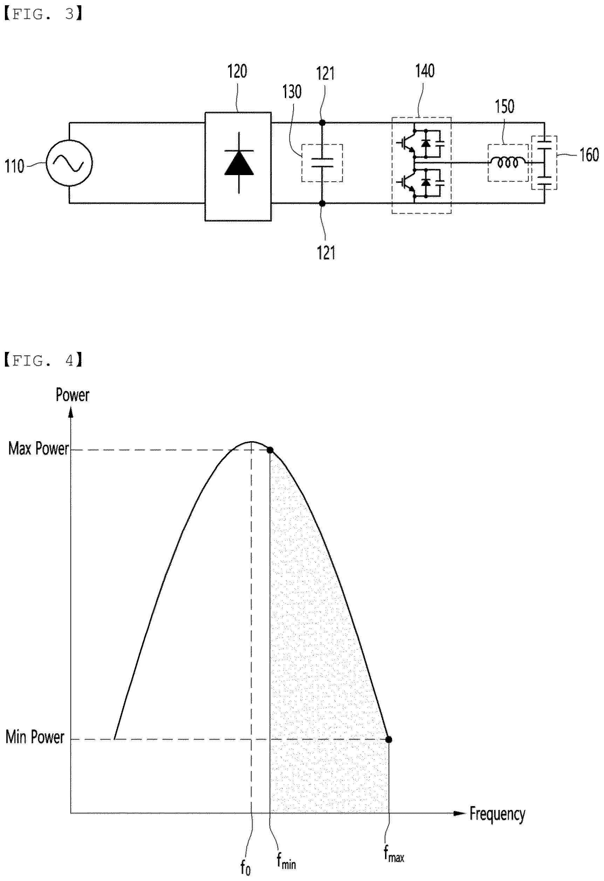

FIG.3 is a diagram illustrating a circuit diagram of a cooktop according to an embodiment of the present disclosure.

Since the circuit diagram of the cooktop 10 shown in FIG. 3 is merely an example for convenience of explanation, the present disclosure is not limited thereto.

Referring to FIG. 3, the induction heating type cooktop comprises at least one of the power supply part 110, rectifier 120, DC link capacitor 130, inverter 140, working coil 150 or resonance capacitor 160.

The power supply part 110 can receive external power input. The power that the power supply unit 110 receives from the outside may be AC (Alternation Current) power.

The power supply part 110 may supply alternating current voltage to the rectifier unit 120.

The rectifier 120 is an electrical device for converting alternating current to direct current. The rectifier 120 converts the alternating current voltage supplied through the power supply part 110 into direct current voltage.

The output terminal of the rectifier 120 may be connected to DC both ends 121. The DC both ends 121 output through the rectifier 120 can be referred to as a DC link. The voltage measured at DC both ends 121 is called the DC link voltage.

The DC link capacitor 130 serves as a buffer between the power supply part 110 and the inverter 140. Specifically, the DC link capacitor 130 is used to maintain the DC link voltage converted through the rectifier 120 and supply it to the inverter 140.

The inverter 140 serves to switch the voltage applied to the working coil 150 so that a high-frequency current flows in the working coil 150. The inverter 140 may include a semiconductor switch, and the semiconductor switch may be an IGBT (Insulated Gate Bipolar Transistor) or WBG (Wide Band Gab) device, but this is only an example and is not limited thereto. Meanwhile, the WBG device may be SiC (Silicon Carbide) or GaN (Gallium Nitride), etc. The inverter 140 drives a semiconductor switch to cause a high-frequency current to flow in the working coil 150, thereby forming a high-frequency magnetic field in the working coil 150.

Current may or may not flow in the working coil 150 depending on whether the switching element is driven. When current flows through the working coil 150, a magnetic field is generated. The working coil 150 can heat the cooking vessel by generating a magnetic field as current flows.

One side of the working coil 150 is connected to the connection point of the switching elements of the inverter 140, and the other side is connected to the resonance capacitor 160.

The switching elements is driven by a driving part (not shown), and is controlled by the switching time output from the driving part, so that the switching elements operate alternately and apply a high-frequency voltage to the working coil 150. And, because the on/off time of the switching elements applied from the driving part (not shown) is controlled in a gradually compensated manner, the voltage supplied to the working coil 150 changes from a low voltage to a high voltage.

The resonance capacitor 160 may be a component that functions as a buffer. The resonant capacitor 160 controls the saturation voltage rise rate during turn-off of the switching elements, thereby affecting energy loss during the turn-off time.

In the case of the cooktop 10 configured with the circuit diagram shown in FIG. 3, the resonance frequency is determined by the inductance value of the working coil 150 and the capacitance value of the resonance capacitor 160. Then, a resonance curve is formed around the determined resonance frequency, and the resonance curve can represent the output power of the cooktop 10 according to the frequency band.

Next, FIG. 4 is a diagram showing output characteristics of a cooktop according to an embodiment of the present disclosure.

First, the Q factor (quality factor) may be a value indicating the sharpness of resonance in a resonant circuit. Accordingly, in the case of the cooktop 10, the Q factor is determined by the inductance value of the working coil 150 included in the cooktop 10 and the capacitance value of the resonance capacitor 160. The resonance curve is different depending on the Q factor. Accordingly, the cooktop 10 has different output characteristics depending on the inductance value of the working coil 150 and the capacitance value of the resonance capacitor 160.

FIG. 4 shows an example of a resonance curve according to Q factor. In general, the larger the Q factor, the sharper the shape of the curve, and the smaller the Q factor, the broader the shape of the curve.

The horizontal axis of the resonance curve may represent frequency, and the vertical axis may represent output power. The frequency that outputs maximum power in the resonance curve is called the resonance frequency (f0).

In general, the cooktop 10 uses the frequency in the right area based on the resonance frequency (f0) of the resonance curve. Additionally, the cooktop 1 may have a minimum and maximum operating frequency set in advance.

As an example, the cooktop 10 may operate at a frequency ranging from the maximum operating frequency (fmax) to the minimum operating frequency (fmin). That is, the operating frequency range of the cooktop 10 may be from the maximum operating frequency (fmax) to the minimum operating frequency (fmin).

As an example, the maximum operating frequency (fmax) may be the IGBT maximum switching frequency. The IGBT maximum switching frequency may refer to the maximum frequency that can be driven, considering the breakdown voltage and capacity of the IGBT switching element. For example, the maximum operating frequency (fmax) may be 75 kHz.

The minimum operating frequency (fmin) may be approximately 20 kHz. In this case, since the cooktop 10 does not operate at audible frequencies (approximately 16Hz to 20kHz), there is an effect of reducing noise from the cooktop 10.

Meanwhile, the setting values of the maximum operating frequency (fmax) and the minimum operating frequency (fmin) described above are only examples and are not limited thereto.

When the cooktop 10 receives a heating command, it can determine the operating frequency according to the heating power level set in the heating command. Specifically, the cooktop 10 can adjust the output power by lowering the operating frequency as the set heating power level becomes higher and increasing the operating frequency as the set heating power level becomes lower. That is, when the cooktop 10 receives a heating command, it can implement a heating mode that operates in any one of the operating frequency ranges according to the set heating power.

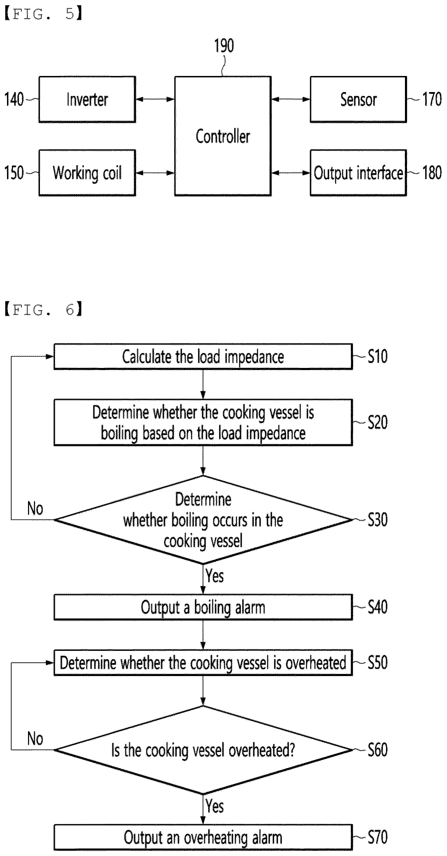

FIG. 5 is a control block diagram of an induction heating type cooktop according to an embodiment of the present disclosure.

The induction heating type cooktop 10 according to an embodiment of the present disclosure may include at least one of an inverter 140, a working coil 150, a sensor 170, an output interface 180, or a controller 190.

The inverter 140 may supply current to the working coil 150. The inverter 140 may convert the direct current power rectified by the rectifier 120 into alternating current power and supply it to the working coil 150. The inverter 140 may be formed in various shapes, such as a half-bridge or full-bridge, etc.

The working coil 150 may receive current from the inverter 140 and generate a magnetic field that passes through the cooking vessel 1.

Sensor 170 can detect temperature. The sensor 170 may be a temperature sensor for detecting the temperature of the cooking vessel 1. The sensor 170 is a sensor disposed at the top of the cooktop 10 and may be a top sensor.

The sensor 170 may be placed in the center of the working coil 150. The sensor 170 may be placed in direct or indirect contact with the upper plate part 11. The sensor 170 can detect the temperature of the cooking vessel 1 through the upper plate part 11. Specifically, since the heat of the cooking vessel 1 is transferred to the upper plate part 11, the sensor 170 can indirectly sense the temperature of the cooking vessel 1 by measuring the temperature of the upper plate part 11.

The output interface 180 may output information related to the operation of the cooktop 10. The output interface 170 may include an audio (not shown) for audibly outputting information related to the cooktop 10 or a display (not shown) for visually outputting information related to the cooktop 10.

The output interface 170 may output at least one of a boiling alarm indicating the occurrence of boiling in the cooking vessel 1 or an overheating alarm indicating overheating of the cooking vessel 1.

The controller 190 can control each component provided in the cooktop 10, such as the inverter 140, working coil 150, sensor 170, and output interface 180, etc.

The controller 190 can detect whether the cooking vessel 1 is overheated. Additionally, the controller 190 may first detect whether the cooking vessel 1 is boiling before detecting whether the cooking vessel 1 is overheated. That is, the controller 190 can detect whether the cooking vessel 1 is boiling and, after boiling is detected, detect whether the cooking vessel 1 is overheated.

The controller 190 can detect whether the cooking vessel 1 is overheated using the load impedance, which will be described in detail below.

FIG. 6 is a flow chart illustrating a method of operating an induction heating type cooktop according to an embodiment of the present disclosure.

The controller 190 can calculate the load impedance (S10).

The load impedance can be calculated through Equation 1 below.

【Equation 1】

$$\frac{1}{\omega}\sqrt{Z^2 - R_{eq}{}^2} + \frac{1}{\omega^2 C_{eq}}$$

In Equation 1 above, w [rad/s] is 2nf, and f may be the operating frequency. And, $Z$ [Ω] is $\sqrt{2} \cdot V_{in}/(\pi \cdot I_{rms})$, $R$ [Ω] is $P/I_{rms}{}^2$, $I_{rms}$ [A] is $I_{peak}/2$, $I_{peak}$ [A] is $0.0049 * I_{ADC} + 10.084$, and $I_{ADC}$ is the current flowing through the working coil 150, and $I_{ADC}$ may vary depending on the set heating power level or the type of cooking vessel 1. $C$ **may be the** capacitance of the resonant capacitor.

Meanwhile, Equation 1 is only an example. That is, the controller 190 may calculate the load impedance using a method other than Equation 1.

The controller 190 may determine whether the cooking vessel 1 is boiling based on the load impedance (S20).

Specifically, the controller 190 may determine whether the cooking vessel 10 is boiling based on the gradient of the load impedance.

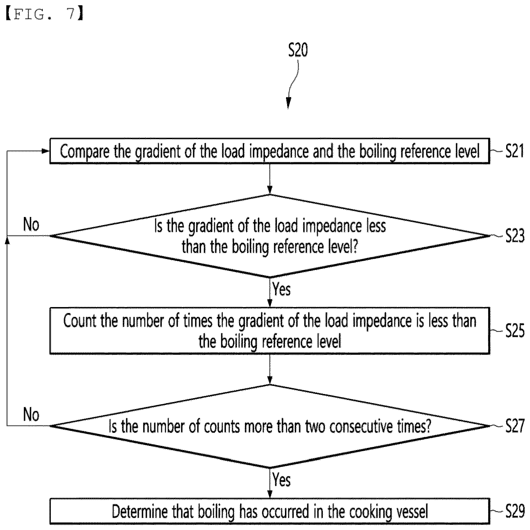

FIG. 7 is a flow chart illustrating a method of determining whether a cooking vessel is boiling in an induction heating type cooktop according to an embodiment of the present disclosure.

FIG. 7 may be a flowchart specifying a method of determining whether the cooking vessel 10 in FIG. 6 is boiling.

The controller 190 may detect whether the cooking vessel 1 is boiling based on the gradient of the load impedance.

Referring to FIG. 7, the controller 190 may compare the gradient of the load impedance and the boiling reference level (S21) .

The boiling reference level may be a preset constant. The boiling reference level is the boundary value between the gradient of the load impedance when the water in the cooking vessel 1 boils and the gradient of the load impedance when the water in the cooking vessel 1 does not boil. The boiling reference level can be calculated and set in advance through experiments with various amounts of water and various vessel materials.

That is, the controller 190 may compare the gradient of the load impedance with a preset boiling reference level.

The controller 190 may determine whether the gradient of the load impedance is less than the boiling reference level (S23).

The gradient of the load impedance is small, that is, the gradient of the load impedance is somewhat flat, which means that the change in load impedance is small, which can be assumed to mean that the water is boiling.

If the gradient of the load impedance is greater than or equal to the boiling reference level, the controller 190 may continue to compare the gradient of the load impedance with the preset boiling reference level.

If the gradient of the load impedance is less than the boiling reference level, the controller 190 may count the number of times the gradient of the load impedance is less than the boiling reference level (S25).

If the cooking vessel is judged to be boiling as soon as the gradient of the load impedance is detected to be less than the boiling reference level, it may be misjudged as boiling due to errors due to the amount of water or the material of the vessel. To minimize this problem, the number of times the gradient of the load impedance is less than the boiling reference level can be counted.

When the controller 190 counts the number of times the gradient of the load impedance is less than the boiling reference level, it can determine whether the number of counts has been two or more consecutively (S27).

If the number of counts does not exceed two consecutive times, the controller 190 may initialize the number of counts and compare the gradient of the load impedance and the boiling reference level again.

If the number of counts is two or more consecutively, the controller 190 may determine that boiling has occurred in the cooking vessel (S29).

That is, the controller 190 may determine that boiling has occurred in the cooking vessel 1 when the gradient of the load impedance is less than the boiling reference level detected two or more times in succession.

Again, FIG. 6 will be described.

The controller 190 may determine whether boiling occurs in the cooking vessel 1 (S30).

If it is not determined that boiling has occurred in the cooking vessel 1, the controller 190 may continue to calculate the load impedance.

Meanwhile, if it is determined that boiling has occurred in the cooking vessel 1, the controller 190 may output a boiling alarm (S40) .

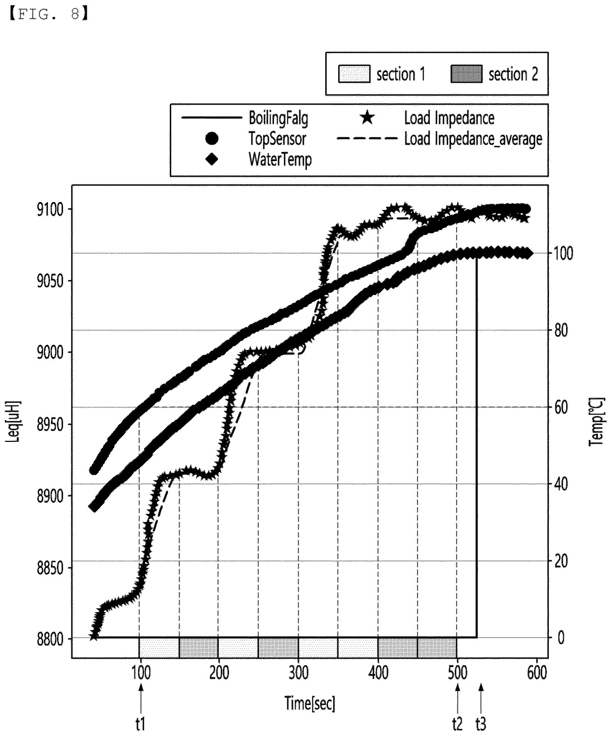

Next, with reference to FIG. 8, a method by which the controller 190 determines whether boiling has occurred in a cooking vessel will be described using a graph of load impedance.

FIG. 8 is a graph showing load impedance when determining boiling of a cooking vessel in an induction heating type cooktop according to an embodiment of the present disclosure.

FIG. 8 shows the load impedance while heating a cooking vessel on an induction heating type cooktop. Meanwhile, since there is a real-time change in the load impedance, the average of the load impedance is also shown in FIG. 8. In this specification, the gradient of the load impedance may mean the gradient of the average of load impedance. In addition, FIG. 8 shows the temperature measured by the sensor 170 and the actual water temperature.

Referring to Figure 8, it can be seen that the temperature of the water gradually increases while the cooking vessel 1 is heated. And, accordingly, it can be seen that the temperature detected by the sensor 170 also gradually increases.

Meanwhile, the load impedance continues to increase, but it can be seen that some flat sections appear. Referring to the average graph of load impedance, a section where the gradient is close to 0 appears. In FIG. 8, the first section (section 1) may be a section where the gradient of the load impedance is greater than the boiling reference level, and the second section (section 2) may be a section where the gradient of the load impedance is less than the boiling reference level.

In FIG. 8, t1 is the point at which the controller 190 starts calculating and storing the load impedance and the gradient of the load impedance. If the second section does not occur more than twice in succession, the controller 190 may continue to calculate and store the load impedance and the gradient of the load impedance. t2 may be the point in time when the second section, that is, the section where the gradient of the load impedance is less than the boiling reference level, is detected twice in succession. The controller 190 may determine that the number of times the gradient of the load impedance is less than the boiling reference level has been counted two or more times in succession at time t2. Accordingly, the controller 190 may determine that boiling has occurred in the cooking vessel 1 and output a boiling alarm at time t3.

Again, FIG. 6 will be described.

The controller 190 can output a boiling alarm of the cooking vessel 1 and determine whether the cooking vessel 1 is overheated (S50) .

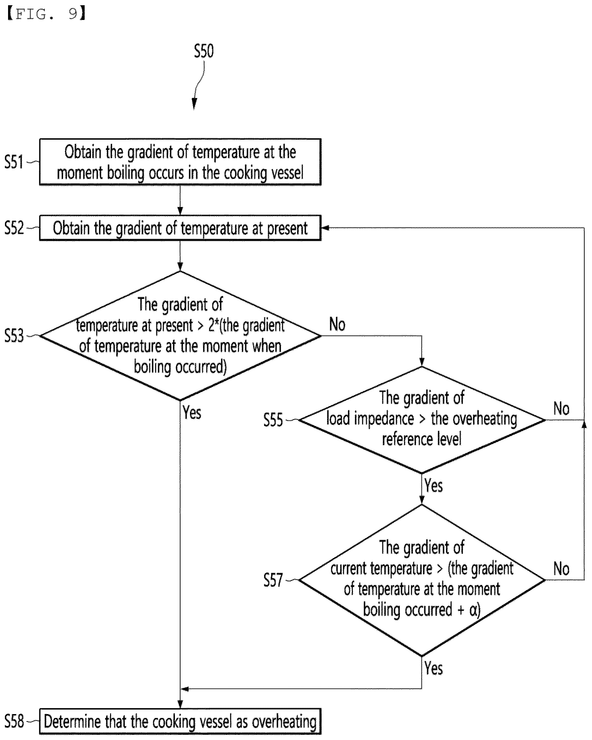

Next, with reference to FIG. 9, a method by which the controller 190 determines whether the cooking vessel 1 is overheated will be described. FIG. 9 is a flow chart illustrating a method of determining whether a cooking vessel is overheated by an induction heating type cooktop according to an embodiment of the present disclosure. FIG. 9 is a flowchart showing step S50 of FIG. 6 in detail.

The controller 190 may obtain the gradient of temperature at the moment boiling occurs in the cooking vessel 1 (S51).

The controller 190 may obtain the gradient of temperature at the moment when the gradient of the load impedance is less than the boiling reference level twice in succession. The controller 190 may obtain the gradient of temperature at time t2 in the graph shown in FIG. 8.

The controller 190 may acquire the gradient of temperature of the cooking vessel 1 through the sensor 170 at the moment boiling occurs in the cooking vessel 1. Specifically, the controller 190 may acquire the gradient of temperature of the cooking vessel 1 detected by the sensor 170 at the moment boiling occurs in the cooking vessel 1. To this end, the gradient of temperature detected by the sensor 170 at the moment boiling occurs in the cooking vessel 1 may be stored in a memory (not shown).

The controller 190 may obtain the gradient of temperature at present (S52).

The controller 190 may obtain the gradient of temperature at present by detected through the sensor 170 at the current time. The gradient of temperature at present may be the gradient of temperature of the cooking vessel 1 detected through the sensor 170 at the current time.

The controller 190 may determine whether the gradient of temperature at present is greater than 2*(the gradient of temperature at the moment when boiling occurred) (S53).

That is, the controller 190 can detect whether the cooking vessel 1 is overheated by further using the temperature of the cooking vessel 1. The controller 190 may determine whether the gradient of temperature at present is greater than twice the gradient of temperature at the moment boiling occurs.

Since the temperature increases rapidly when the cooking vessel 1 is overheated, it is possible to determine whether the cooking vessel 1 is overheated through a change in temperature gradient.

If the gradient of current temperature is greater than twice the gradient of temperature at the moment boiling occurred, the controller 190 may determine that the cooking vessel 1 as overheating (S58).

That is, the controller 190 determines that the cooking vessel 1 as overheating if the gradient of temperature detected through the sensor 170 at the moment boiling occurred in the cooking vessel (1) is greater than twice the gradient of the temperature currently detected through the sensor (170).

If the gradient of current temperature is equal to or less than twice the gradient of temperature at the moment boiling occurred, the controller 190 determines whether the gradient of load impedance is greater than the overheating reference level (S55). If the gradient of load impedance is greater than the overheating reference level, the controller 190 determines whether the gradient of current temperature is greater than a value of (the gradient of temperature at the moment boiling occurred + a predetermined value ($\alpha$)) (S57).

Depending on the vessel material, there may be a cooking vessel 1 that rapidly overheated after all the water evaporates, while another cooking vessel 1 may overheated slowly due to the large heat capacity of the vessel itself. When heating the cooking vessel 1 which has a large heat capacity of the vessel itself, heat transfer to the sensor 170 is slow, so overheating detection may be difficult using just a gradient of temperature, so auxiliary operation for overheating detection such as steps S55 and S57 can be performed.

If the gradient of the load impedance is greater than the overheating reference level and the gradient of the current temperature is greater than a value acquired by adding a predetermined value ($\alpha$) to the gradient of temperature at the moment boiling occurred, the controller 190 determines that the cooking vessel 1 as overheating. The predetermined value is a preset value and may be set differently depending on the performance of each component.

Meanwhile, the controller 190 determines that the cooking vessel 1 has not yet overheated and continue to obtain the gradient of temperature at present if the gradient of the load impedance is equal to or less than the overheating reference level or if the gradient of the current temperature is equal to or less than the value obtained by adding a predetermined value to the gradient of temperature at the moment boiling occurred.

Again, FIG. 6 will be described.

The controller 190 may check whether it is determined whether the cooking vessel 1 is overheated (S60).

If the cooking vessel 1 is not overheated, the controller 190 may continue to determine whether the cooking vessel 1 is overheated.

If the cooking vessel 1 is overheated, the controller 190 may output an overheating alarm (S70).

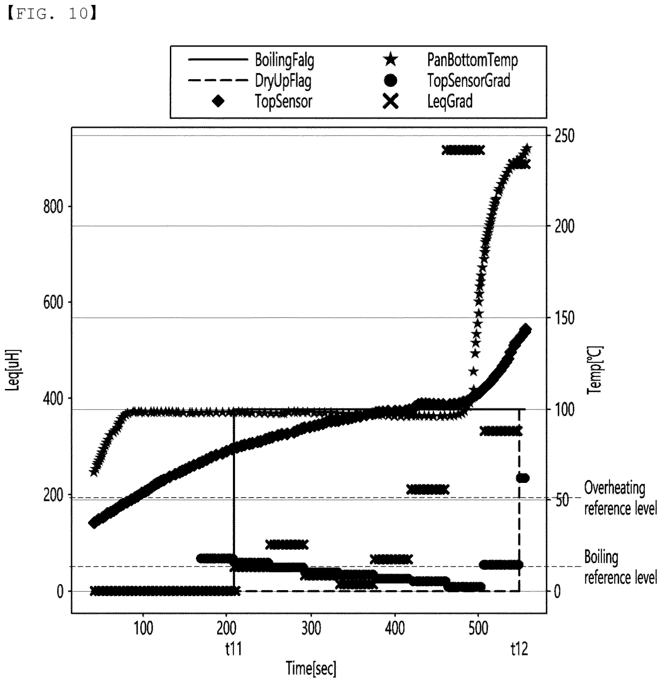

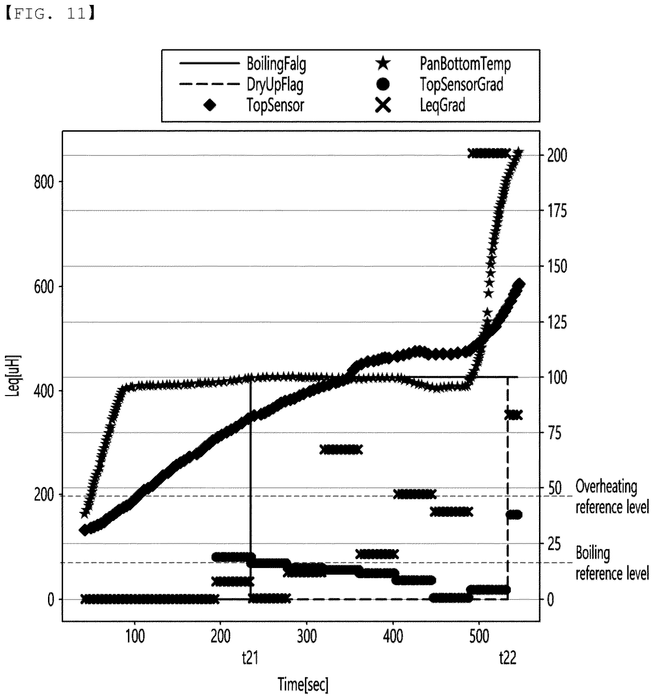

FIG. 10 is a graph showing the gradient of the temperature and load impedance while the induction heating type cooktop according to an embodiment of the present disclosure heats a cooking vessel made of a first material and FIG. 11 is a graph showing the gradient of the temperature and load impedance while the induction heating type cooktop according to an embodiment of the present disclosure heats a cooking vessel made of a second material.

Referring to FIG. 10, the controller 190 outputs a boiling alarm at time point t11, and at this time, obtain the gradient of temperature. Afterwards, the controller 190 may determine whether the gradient of the current temperature is greater than twice the gradient of temperature at the time point of boiling. The controller 190 may detect that the gradient of current temperature is greater than twice the gradient of temperature at the boiling point and output an overheating alarm at time point t12.

Referring to FIG. 11, the controller 190 outputs a boiling alarm at time point t21, and at this time, obtain the gradient of temperature. Afterwards, the controller 190 may determine whether the gradient of current temperature is greater than twice the gradient of temperature at the point of boiling. However, before the gradient of the current temperature becomes twice the gradient of temperature at the time point of boiling, the controller 190, at time point t22, detects that the gradient of the load impedance is greater than the overheating reference level, and the gradient of the current temperature is greater than the value acquired by adding the predetermined value to the gradient of temperature at the time point of boiling, and output an overheating alarm.

In this way, the induction heating type cooktop 10 according to the present disclosure can determine whether the cooking vessel 1 is overheated through the load impedance and the temperature of the cooking vessel 1. Therefore, there is an advantage of being able to detect overheating due to dry-up regardless of the amount of water and the material of the vessel.

The above description is merely an illustrative explanation of the technical idea of the present disclosure, and those skilled in the art will be able to make various modifications and variations without departing from the essential characteristics of the present disclosure.

Accordingly, the embodiments disclosed in the present disclosure are not intended to limit the technical idea of the present disclosure but are for illustrative purposes, and the scope of the technical idea of the present disclosure is not limited by these embodiments.

The scope of protection of this disclosure should be interpreted in accordance with the claims below, and all technical ideas within the equivalent scope should be interpreted as being included in the scope of rights of this disclosure.

## Claims

1. An induction heating type cooktop comprising:

   an upper plate part on which a cooking vessel is placed;
   a working coil configured to generate a magnetic field passing through the cooking vessel;
   an inverter configured to supply current to the working coil; and
   a controller configured to detect whether the cooking vessel is overheated,
   wherein the controller is configured to detect whether the cooking vessel is overheated using load impedance.

2. The induction heating type cooktop of claim 1, wherein the controller is configured to detect whether the cooking vessel is boiling, and to detect whether the cooking vessel is overheated after boiling is detected.

3. The induction heating type cooktop of claim 2, wherein the controller is configured to detect whether the cooking vessel is boiling based on a gradient of the load impedance.

4. The induction heating type cooktop of claim 3, wherein the controller is configured to determine that boiling has occurred in the cooking vessel when it is detected that the gradient of the load impedance is less than a boiling reference level two or more times in succession.

5. The induction heating type cooktop of claim 4, further comprising an output interface configured to output an alarm indicating the boiling has occurred.

6. The induction heating type cooktop of claim 1, further comprising a sensor configured to detect a temperature of the cooking vessel, and
   wherein the controller is configured to detect whether the cooking vessel is overheated by further using the temperature of the cooking vessel.

7. The induction heating type cooktop of claim 6, wherein the controller is configured to determine that the cooking vessel as overheating if a gradient of temperature detected through the sensor at a moment the boiling has occurred in the cooking vessel is greater than twice a gradient of temperature detected through the sensor at current time.

8. The induction heating type cooktop of claim 7, wherein the controller is configured to further perform an auxiliary operation for detecting overheating if the gradient of temperature detected through the sensor at the moment the boiling has occurred in the cooking vessel is equal to or less than twice the gradient of temperature detected through the sensor at current time.

9. The induction heating type cooktop of claim 8, wherein the controller is configured to determine that the cooking vessel as overheating when it is determined that a gradient of the load impedance is greater than an overheating reference level and the gradient of temperature detected at current time is greater than a value obtained by adding a predetermined value to the gradient of the temperature at the moment the boiling has occurred by the auxiliary operation.

**10.** The induction heating type cooktop of claim 1, further comprising an output interface configured to output an alarm indicating the overheating has occurred.

【FIG. 1】

【FIG. 2】

【FIG. 3】

【FIG. 4】

【FIG. 5】

190

140 — Inverter ↔ Controller ↔ Sensor — 170

150 — Working coil ↔ ↔ Output interface — 180

【FIG. 6】

Calculate the load impedance — S10

Determine whether the cooking vessel is boiling based on the load impedance — S20

Determine whether boiling occurs in the cooking vessel — S30

No

Yes

Output a boiling alarm — S40

Determine whether the cooking vessel is overheated — S50

Is the cooking vessel overheated? — S60

No

Yes

Output an overheating alarm — S70

【FIG. 7】

S20

Compare the gradient of the load impedance and the boiling reference level — S21

No ← Is the gradient of the load impedance less than the boiling reference level? — S23

Yes

Count the number of times the gradient of the load impedance is less than the boiling reference level — S25

No ← Is the number of counts more than two consecutive times? — S27

Yes

Determine that boiling has occurred in the cooking vessel — S29

【FIG. 8】

【FIG. 9】

S50

S51 — Obtain the gradient of temperature at the moment boiling occurs in the cooking vessel

S52 — Obtain the gradient of temperature at present

S53 — The gradient of temperature at present > 2*(the gradient of temperature at the moment when boiling occurred)

No

Yes

S55 — The gradient of load impedance > the overheating reference level

No

Yes

S57 — The gradient of current temperature > (the gradient of temperature at the moment boiling occurred + α)

No

Yes

S58 — Determine that the cooking vessel as overheating

【FIG. 10】

【FIG. 11】

## INTERNATIONAL SEARCH REPORT

| | International application No. |
|---|---|
| | **PCT/KR2022/004394** |

### A. CLASSIFICATION OF SUBJECT MATTER

**H05B 6/12**(2006.01)i; **H05B 6/06**(2006.01)i; **A47J 36/32**(2006.01)i

According to International Patent Classification (IPC) or to both national classification and IPC

### B. FIELDS SEARCHED

Minimum documentation searched (classification system followed by classification symbols)

H05B 6/12(2006.01); G01K 7/34(2006.01); G05D 23/19(2006.01); H05B 1/02(2006.01); H05B 6/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 유도가열(inductive heating), 쿡탑(cook-top), 인버터(inverter), 임피던스(impedance), 온도(temperature)

### C. DOCUMENTS CONSIDERED TO BE RELEVANT

| Category* | Citation of document, with indication, where appropriate, of the relevant passages | Relevant to claim No. |
|---|---|---|
| Y | KR 10-2019-0102453 A (LG ELECTRONICS INC.) 04 September 2019 (2019-09-04)<br>See paragraphs [0035]-[0036] and [0060]; claim 1; and figures 3 and 7. | 1-10 |
| Y | KR 10-0938713 B1 (MERILUCK CO., LTD.) 25 January 2010 (2010-01-25)<br>See claim 1; and figures 1-11. | 1-10 |
| Y | KR 10-2019-0074499 A (RINNAI KOREA CO., LTD.) 28 June 2019 (2019-06-28)<br>See claim 1. | 5,10 |
| A | KR 10-2020-0040666 A (E.G.O. ELEKTRO-GERAETEBAU GMBH) 20 April 2020 (2020-04-20)<br>See claims 1 and 12. | 1-10 |
| A | KR 10-2021-0105694 A (LG ELECTRONICS INC.) 27 August 2021 (2021-08-27)<br>See claims 11-15; and figure 6. | 1-10 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 August 2022** | **17 August 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/004394**

| Patent document cited in search report | | | Publication date (day/month/year) | Patent family member(s) | | | Publication date (day/month/year) |
|---|---|---|---|---|---|---|---|
| KR | 10-2019-0102453 | A | 04 September 2019 | EP | 3531799 | A1 | 28 August 2019 |
| | | | | EP | 3531799 | B1 | 07 April 2021 |
| | | | | KR | 10-2024554 | B1 | 24 September 2019 |
| | | | | US | 2019-0268979 | A1 | 29 August 2019 |
| KR | 10-0938713 | B1 | 25 January 2010 | | None | | |
| KR | 10-2019-0074499 | A | 28 June 2019 | | None | | |
| KR | 10-2020-0040666 | A | 20 April 2020 | CN | 111024254 | A | 17 April 2020 |
| | | | | EP | 3637948 | A1 | 15 April 2020 |
| KR | 10-2021-0105694 | A | 27 August 2021 | EP | 3869918 | A1 | 25 August 2021 |
| | | | | US | 2021-0259067 | A1 | 19 August 2021 |
| | | | | WO | 2021-167163 | A1 | 26 August 2021 |

Form PCT/ISA/210 (patent family annex) (July 2019)